# EUROPEAN PATENT APPLICATION

(11) **EP 1 746 393 A1**
(43) Date of publication of application: **24.01.2007**
(21) Application number: 06014587.7
(22) Date of filing: 13.07.2006
(51) Int. Cl.: G01F 1/684, G01F 1/692

(54) **Thermal type gas flow measuring apparatus comprising a diaphragm**

(30) Priority: 13.07.2005 JP 2005204620
(71) Applicant: HITACHI, LTD., Chiyoda-ku Tokyo 100-8280 (JP)
(72) Inventor: Hanzawa, Keiji c/o Hitachi Car Engineering Co.Ltd, Mito-shi Ibaraki-ken (JP); Shimada, Satoshi c/o Hitachi Car Eng. Co.Ltd, Hitachi-shi Ibaraki-ken (JP); Yasukawa, Akio c/o Hitachi Ltd. Int. Prop. Group, Tokyo 100-8220 (JP); Saito, Naoki c/o Hitachi Car Engineering Co.Ltd, Ibaraki-ken (JP); Nakada, Keiichi c/o Hitachi Ltd. Int. Prop. Group, Tokyo 100-8220 (JP); Watanabe, Izumi c/o Hitachi Car Engineering Co.Ltd, Ibaraki-ken (JP)
(74) Representative: Beetz & Partner

(57) **Abstract**

The present invention relates to a gas flow measuring apparatus which includes a detecting element (1) including a heating resistor (2) and a thermo-sensitive resistor (6-9) disposed on a diaphragm (10) and external terminals (12-24) connected to the heating resistor (2) and the thermo-sensitive resistor (6-9), and a flow rate detecting unit (29) which controls heating temperature of the heating resistor (2) and which detects a flow rate of gas according to a change in a resistance value of the heating resistor (2) or the thermo-sensitive resistor (6-9). The detecting element includes a resistor area in which the heating resistor and the thermo-sensitive resistor are formed and a fixed section area in which the external terminals are formed. A stress mitigating unit (11, 11a-11c) is formed between the resistor area and the fixed section area.

## Description

### BACKGROUND OF THE INVENTION

The present invention relates to a flow meter to measure a gas flow rate, and in particular, to a gas flow measuring apparatus suitable to detect an air flow rate sucked by an engine of a car.

There have been known an intake air flow meter of an engine of a car as an example of a gas flow measuring apparatus of a method in which a heating control current value of a heating resistor is detected to be converted into an air flow rate and an intake air flow meter of a method in which thermal influences on thermo-sensitive resistors disposed in the upstream and the downstream of a resistor are detected as a temperature difference signal to obtain the signal as a voltage of a bridge circuit.

In this connection, to detect the intake air flow rate to a car engine, it is required that the characteristics should be stable in consideration of the following conditions and environments.
(1) Consideration for characteristic variations due to influences from residual stress, creep, and the like in the process of mounting the air flow meter on an engine.
(2) Consideration for influences from corrupted substances due to water vapor, oil, gasoline, salt, and the like.
(3) Consideration for severe environmental temperature change (from a subzero temperature to 100°C or more).

For the air flow meter, by etching part of a semiconductor substrate, there are formed a heating resistor and a flow detecting element. The semiconductor substrate on which the flow detecting element is formed is mounted on a supporting unit by an adhesive.

In this situation, to mitigate the stress such as the stress in the mounting stage, there has been known a technique of using an elastic silicone adhesive as an adhesive to adhere the semiconductor substrate to the holding unit.

Additionally, to lower the stress occurring due to the difference in the thermal expansion coefficient between the semiconductor substrate and the holding unit, there has been also known a technique in which the semiconductor substrate is adhered to the holding unit only on the bonding lower surface.

Moreover, JP-A-2000-292236 describes a technique in which on the upstream and downstream sides of the heating resistor, a cavity is formed by partially removing a planar substrate to increase the heat resistance of the substrate and to decrease the thermal capacitance so as to improve the detection sensitivity and response.

### SUMMARY OF THE INVENTION

It has been desired to further decrease the air flow measuring apparatus in its size. In association with the decrease in the size, when the detecting element is mounted on the substrate in the technique of JP-A-2000-292236, there occur the stress due to the difference in the thermal expansion coefficient between the semiconductor substrate and the holding unit and the package member as well as the mounting stress residual strain at assembly, which likely exert influence upon the characteristic of the detecting element.

The diaphragm section on which the heating resistor is to be mounted is formed using a thin film and hence is easily distorted by stress, and although resistors formed using a polycrystalline silicon or a platinum film are employed for the thin film to form the detecting element, these resistors have a strain-resistance effect in which the resistance value changes with the stress strain.

Therefore, when the strain takes place in the resistor, the resistance change occurs and the characteristic likely changes. Also, when a resin material and a resin adhesive are employed as package materials, stress change occurs due to creep and there exists a possibility that the characteristic gradually changes.

The silicone adhesive has a problem that the adhesive changes in quality by gasoline, oil, and the like and phenomena such as volume expansion easily occurs. Although there have also been developed materials having a less swelling characteristic with respect to gasoline, such materials lead to a high cost and hence there exists a problem when a large amount of such materials are used for cars.

It is difficult to control a fixed coating contour of the adhesive. To lower and to stabilize the stress only by limiting adhering positions, there exists a strong restriction in the production.

It is an object of the present invention to implement a gas flow measuring apparatus in which transmission of stress to the resistors on the diaphragm is reduced in the mounting stage without increasing the cost and it is possible to suppress changes in the characteristics such as the sensitivity and the response when the size of the apparatus is reduced.

The present invention achieves the object to suppress the characteristic changes due to the mounting stress, without restrictions such as adoption of special materials and a special production condition.

According to the present invention, there is provided a gas flow measuring apparatus comprising detecting element means comprising a heating resistor and a thermo-sensitive resistor disposed on a diaphragm and external terminals connected to the heating resistor and the thermo-sensitive resistor, and/or flow rate detecting means which controls heating temperature of the heating resistor and which detects a flow rate of gas according to a change in a resistance value of the heating resistor or the thermo-sensitive resistor, wherein the detecting element means may comprise a resistor area in which the heating resistor and the thermo-sensitive resistor are formed and a fixed section area in which the external terminals are formed, and stress mitigating means is formed between the resistor area and the fixed section area.

The stress mitigating means may be formed using a groove or a through-hole. Also, it may be formed using a flexible material layer including a material more flexible than a material of the detecting element means.

In the gas flow measuring apparatus of the present invention, since only the stress mitigating means is formed, there can be implemented a gas flow measuring apparatus in which transmission of stress to the resistors on the diaphragm is reduced in the mounting stage without increasing the cost and it is possible to suppress changes in the characteristics such as the sensitivity and the response when the size of the apparatus is reduced.

Since the selection range becomes wider for materials such as a substrate on which the detecting element is mounted, structure members, and adhesives, the cost reduction and the reliability improvement are realized, and since the degree of freedom is increased for the structural design, there exists an advantage that the cost and the weight can be more easily reduced.

Other objects, features and advantages of the invention will become apparent from the following description of the embodiments of the invention taken in conjunction with the accompanying drawings. The above-mentioned features may be combined in any way, partly or as a whole.

### BRIEF DESCRIPTION OF THE DRAWINGS

Fig. 1 is a diagram showing planar structure of a flow rate detecting element in an air flow measuring apparatus in a first embodiment of the present invention.
FIG. 2 is a cross-sectional view along line II-II' of FIG. 1.
FIG. 3 is a diagram showing a circuit layout of the air flow meter in the first embodiment of the present invention.
FIG. 4 is a schematic mounted cross-sectional view in a state in which the air flow measuring apparatus of the present invention is actually used.
FIG. 5 is a cross-sectional view along line V-V' of FIG. 4.
FIG. 6 is a diagram schematically showing a relationship between the horizontal length of the horizontal groove and the mounting stress transmitted to the diaphragm.
FIG. 7 is a diagram showing planar structure of a flow rate detecting element in the air flow measuring apparatus in a second embodiment of the present invention.
FIG. 8 is a diagram showing planar structure of a flow rate detecting element in the air flow measuring apparatus in a third embodiment of the present invention.
FIG. 9 is a cross-sectional view along line V-V' of FIG. 4 of the air flow measuring apparatus in the third embodiment.
FIG. 10 is a diagram showing planar structure of a flow rate detecting element in the air flow measuring apparatus in a fourth embodiment of the present invention.
FIG. 11 is a cross-sectional view along line XI-XI' of FIG. 10.
FIG. 12 is a diagram showing results of calculation of the stress reduction effect with respect to the groove width.

### DESCRIPTION OF THE EMBODIMENTS

Next, description will be given of an embodiment of the present invention by referring to accompanying drawings.

### (First embodiment)

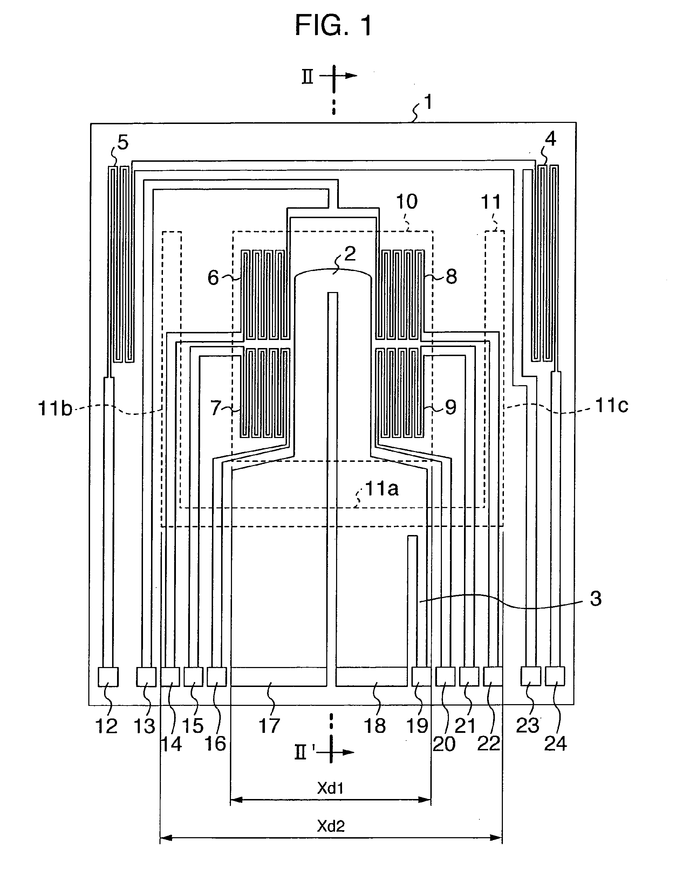

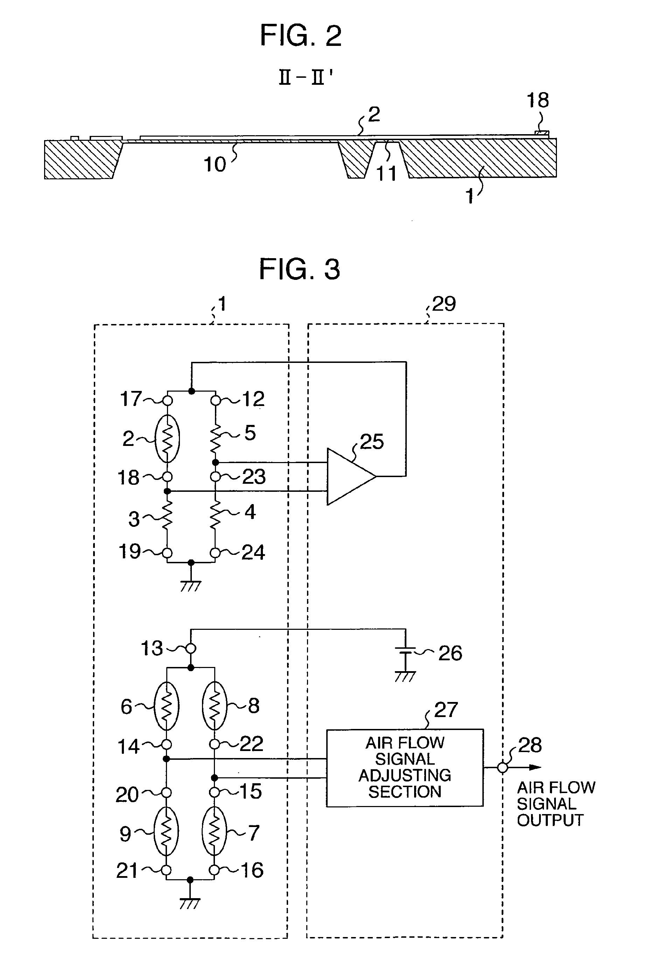

FIG. 1 is a diagram showing planar structure of a flow rate detecting element in an air flow measuring apparatus in a first embodiment of the present invention. FIG. 2 is a cross-sectional view along line II-II' of FIG. 1.

In FIGS. 1 and 2, in a detecting element 1, a diaphragm 10 for the air flow rate detection worked and formed by an etching process using alkaline solvent or the like beginning at a rear surface of a substrate (first substrate) with a horizontal length of Xdl in the diagrams (outer diameter size of the diaphragm). On the diaphragm 10, a heating resistor 2 as a detecting resistor, upstream-side thermo-sensitive resistors 6 and 7, and downstream-side thermo-sensitive resistors 8 and 9 are disposed.

On the substrate in the periphery of the diaphragm 10, fixed resistors 3 and 4 and a temperature measuring resistor 5 are formed. These resistors are fabricated using a platinum film and/or a polycrystalline silicon film of which the resistance value changes with the temperature. The connections to an external device outside these elements are conducted using terminals 12 to 24.

To reduce or to mitigate the stress transmission from the portions in which the terminals 12 to 24 are disposed to the diaphragm 10, an inverse-C-shaped groove 11 (stress mitigating unit) is formed in the periphery of the diaphragm 10 with a horizontal length of Xd2 in the diagrams. The groove 11 includes a horizontal groove 11a and two vertical grooves 11b and 11c.

And the groove 11 is formed beginning at the rear surface side of the substrate using a working method and film structure similar to those of the diaphragm 10.

FIG. 3 is a diagram showing a circuit layout of an air flow meter in the first embodiment of the present invention.

In FIG. 3, the air flow meter includes a detecting element 1 which is exposed in an air passage pipe and which detects an air flow rate and an air temperature and an air flow rate detecting circuit 29 which converts the air flow rate into an electric signal to adjust the detected signal to a predetermined characteristic.

The heating resistor 2, the temperature measuring resistor 25, and the fixed registers 3 and 4 configure a bridge circuit. The terminal 18 indicating the potential of the connecting point between the heating resistor 2 and the fixed resister 3 and the terminal 23 indicating the potential of the connecting point between the temperature measuring resistor 25 and the fixed resister 4 are connected to input terminals of an operational amplifier 25. To equalize these potentials to each other, a heating current supplied to the heating resistor 2 is feedback controlled by the operational amplifier 25.

A power source 26 is connected to a bridge circuit including the thermo-sensitive resistors 6 and 7 which are disposed on the upstream side in a direction of the air flow and of which the resistance value changes by a thermal influence from the heating resistor 2 and the thermo-sensitive resistors 8 and 9 which are disposed on the downstream side of the heating resistor 2.

For the differential signal corresponding to the air flow rate, the terminal 14 (or 20) indicating the potential of the connecting point between the thermo-sensitive resistors 6 and 9 and the terminal 22 (or 15) indicating the potential of the connecting point between the thermo-sensitive resistors 8 and 7 are connected to an air flow signal adjusting section 27. The differential signal between these potentials is adjusted by the air flow signal adjusting section 27 to a predetermined characteristic to be outputted as an air flow signal from an external terminal 28.

The operational amplifier 25, the power source 26, and the air flow signal adjusting section 27 configure an air flow detecting circuit 29.

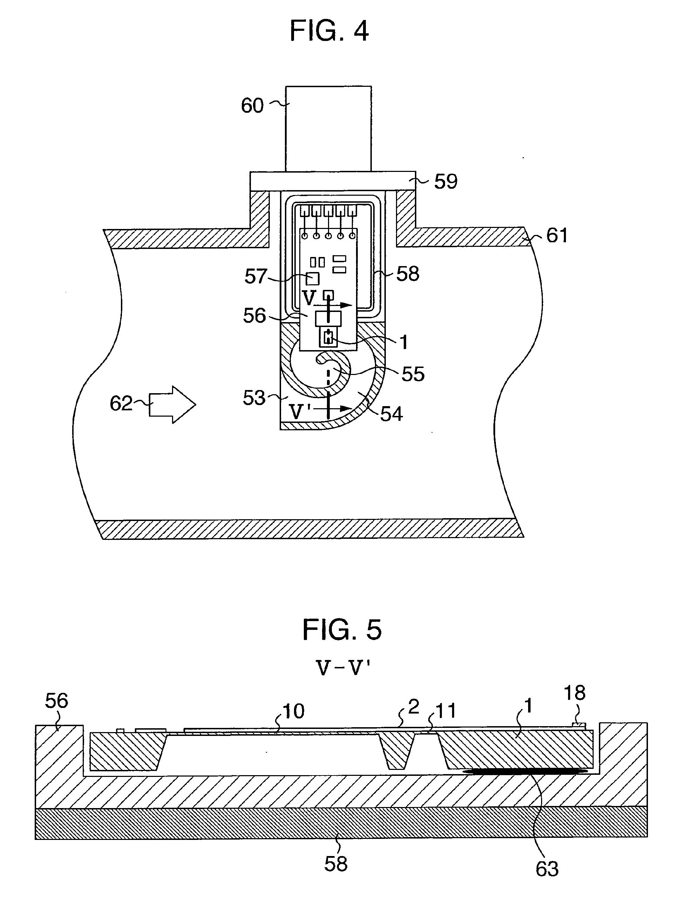

FIG. 4 is a schematic mounted cross-sectional view in a state in which the air flow measuring apparatus of the present invention is actually used.

In FIG. 4, an air flow measuring apparatus 60 is mounted in the form to be inserted in an air passage pipe 61 and is fixed to the air passage pipe (intake pipe) 61 by a flange 59. Onto a housing 58, there is attached a circuit board 56 on which the detecting element 1 and a circuit element 57 are mounted.

An air flow 62 flowing through the intake pipe 61 is divided by an air inlet 53 to flow into the air flow measuring apparatus 60 such that the air flow passes a bypass passage 54 to detour over the detecting element 1 and is returned from a bypass outlet 55 into the main passage pipe 61.

In such actual usage environment, heat generated by the engine transmits through the passage pipe 61 and the air flow 62 up to the air flow measuring apparatus 60 to exert a temperature influence upon the detecting element 1 depending on cases.

FIG. 5 is a cross-sectional view along line V-V' of FIG. 4.

In FIG. 5, the detecting element 1 is fixed onto the board 56 and the housing 58 on the side of the terminal 8 by an adhesive 63. The area (fixed-section area) of the detecting element 1 on which the terminals 12 to 24 are formed is separated from the area (resistor area) on which the diaphragm 10 and the resistors 4 and 5 are formed, by a prolonged line of the horizontal groove 11a of the groove 11 in the front-rear direction of the sheet of paper of FIG. 5. The area in which the terminals 12 to 24 are formed is a fixed section.

And a bottom section of the fixing section is fixed onto the board 56 by the adhesive 63; the mounting stress to be possibly transmitted to the area in which the diaphragm 10 is formed is absorbed by the stress mitigating groove 11a. This avoids unstableness of the characteristic of the detecting element.

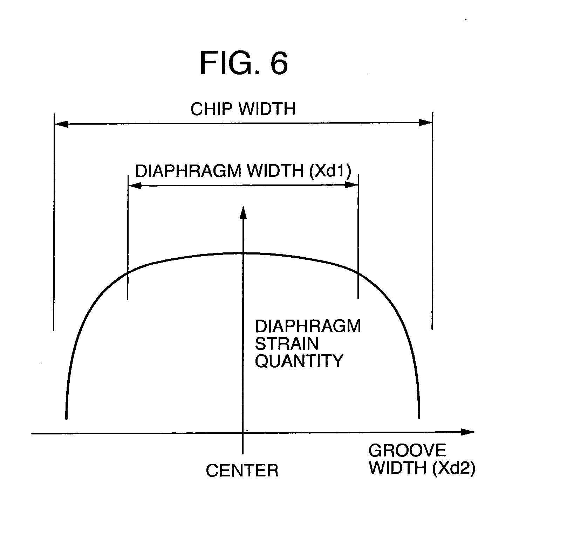

FIG. 6 is a diagram schematically showing a relationship between the horizontal length Xd2 of the horizontal groove 11a and the mounting stress transmitted to the diaphragm 10. It can be understood that by setting the horizontal length Xd2 of the groove 11a to be larger than the horizontal length Xd1 of the diaphragm 10, the mounting stress is reduced.

In the first embodiment of the present invention, since the horizontal groove 11a is formed in the form to separate the diaphragm 10 from the fixing section as shown in FIG. 1, it is possible to restrict the transmission of the mounting stress to the diaphragm 10 without changing the mounting materials such as the board 56, the housing 58, and the adhesive 63.

Therefore, it is possible to implement a gas flow measuring apparatus in which transmission of stress to the resistors on the diaphragm is reduced in the mounting stage without increasing the cost and it is possible to suppress changes in the characteristics such as the sensitivity and the response when the size of the apparatus is reduced.

Since the horizontal groove 11a and the vertical grooves 11b and 11c are simultaneously formed in the working process of the diaphragm 10, the change in the production process is not required, either. The thickness size of the thinner section formed by the groove 11 can be substantially equal to that of the diaphragm 10.

In this regard, the inventor has confirmed the stress reduction effect in a case in which only the vertical grooves 11b and 11c are formed and a case in which not only the vertical grooves 11b and 11c, but also the horizontal groove 11a is formed. As a result, it is confirmed that the stress is reduced to about 1/10 in the case in which not only the vertical grooves 11b and 11c, but also the horizontal groove 11a is formed when compared with the case of only the vertical grooves 11b and 11c.

### (Second embodiment)

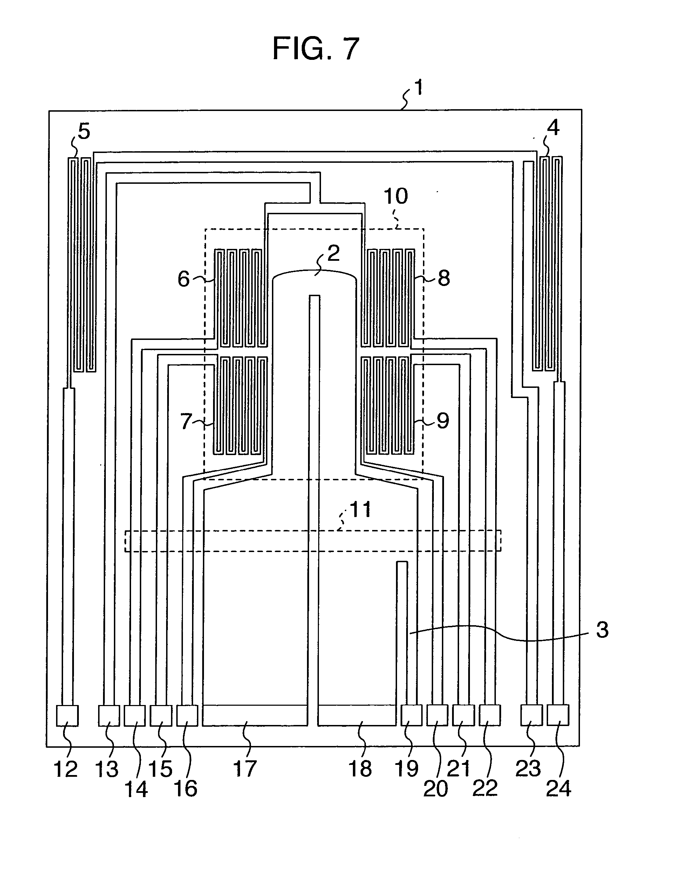

FIG. 7 is a diagram showing planar structure of a flow rate detecting element in the air flow measuring apparatus in a second embodiment of the present invention. The second embodiment is an example in which, as compared with the first embodiment shown in FIG. 1, the shape of the groove 11 is changed from the "inverse-C" shape to the "I" shape and only the horizontal 11a is disposed. The other structure is equal to that of the example of FIG. 1.

By using the groove shape as shown in FIG. 7, the mounting stress reduction can be achieved using the minimum required working area, and hence the strain influence can be suppressed without lowering strength.

### (Third embodiment)

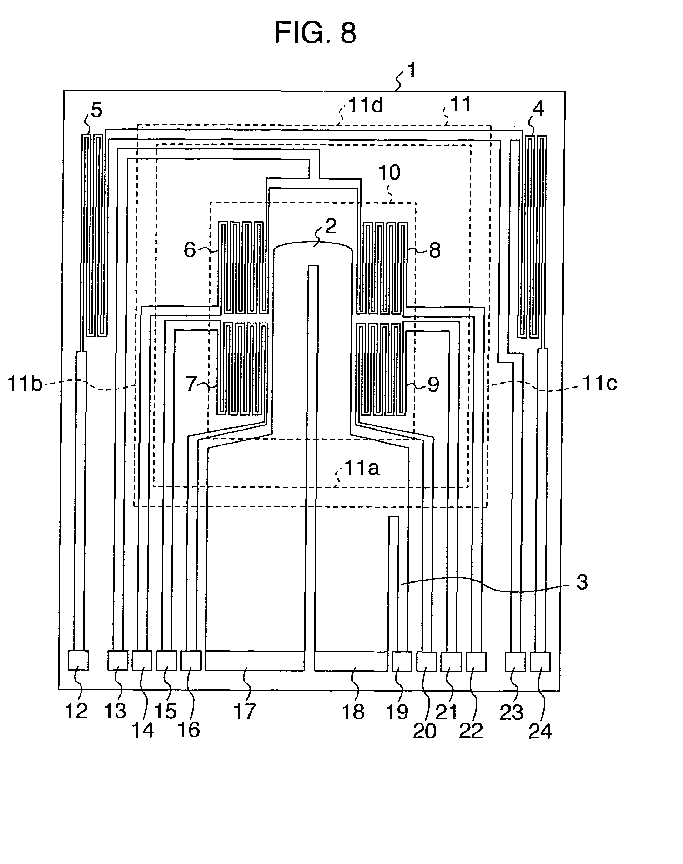

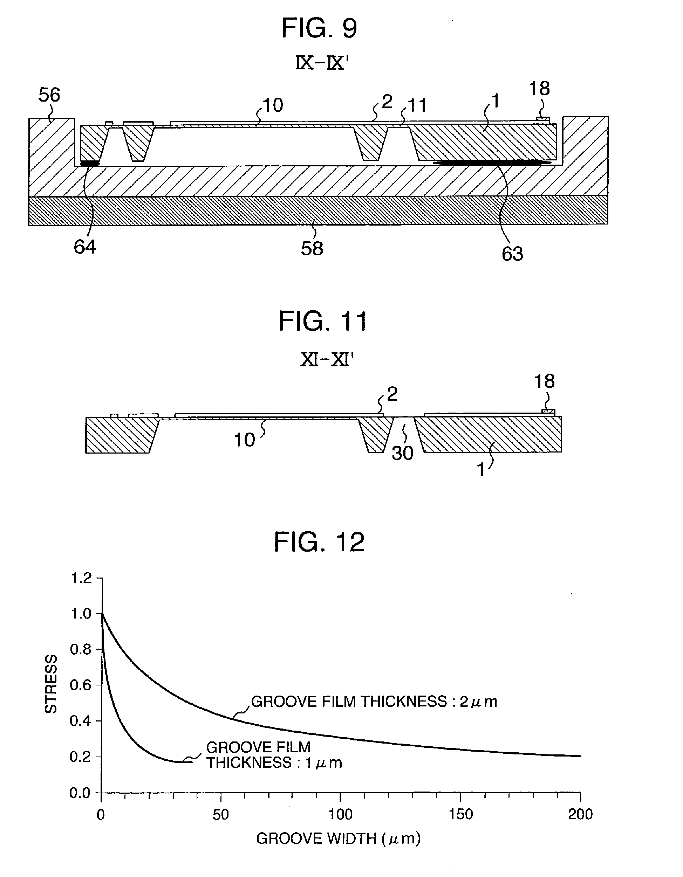

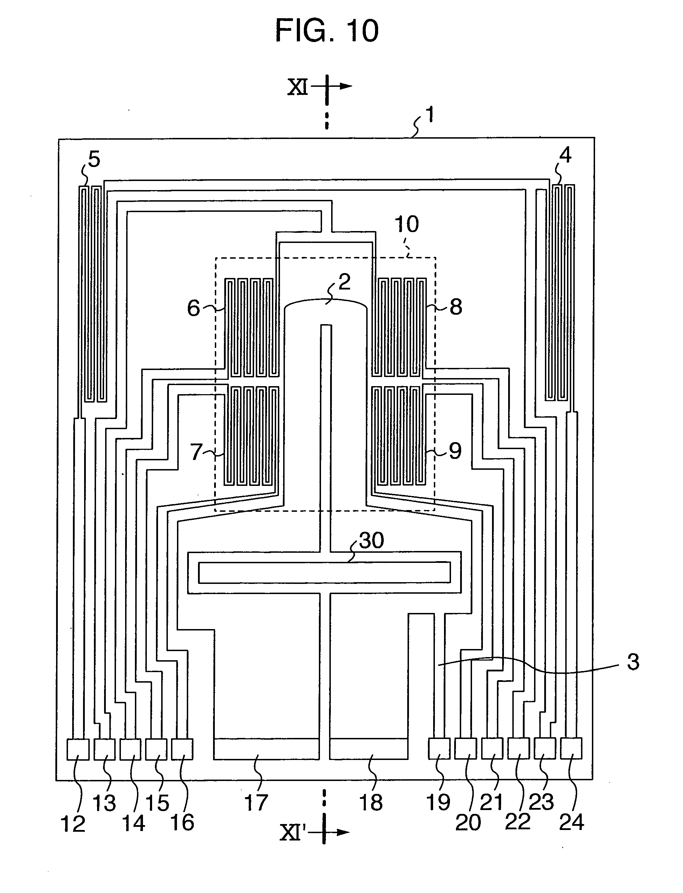

FIG. 8 is a diagram showing planar structure of a flow rate detecting element in the air flow measuring apparatus in a third embodiment of the present invention. FIG. 9 is a cross-sectional view along line V-V' of FIG. 4 of the air flow measuring apparatus in a third embodiment.

The third embodiment is implemented by changing the "inverse-C" shape of the first embodiment shown in FIG. 1 to a shape to surround the entire periphery of the diaphragm 10, and a horizontal groove 11d is added. The other structure is equal to that of the example of FIG. 1.

By using the groove shape of this kind, the strain influence can be suppressed in the mounting structure in which the detecting element is fixed onto the board 56 by the adhesive 64 not only in the area in which the terminals 12 to 24 are formed, but also in the tip end section of the detecting element 1 (the edge section area opposing to the fixed section area with the diaphragm 10 and the horizontal groove 11d therebetween) as shown in FIG. 9.

### (Fourth embodiment)

FIG. 10 is a diagram showing planar structure of a flow rate detecting element in the air flow measuring apparatus in a fourth embodiment of the present invention. FIG. 11 is a cross-sectional view along line XI-XI' of FIG. 10.

The fourth embodiment is implemented by changing the horizontal groove 11a from the groove shape to a through-hole 30; and the other structure is equal to that of the example of FIG. 7.

By changing the horizontal groove 11a to the through-hole 30 as above, it is possible to more securely suppress the transmission of the strain influence to the diaphragm 10.

In the first to third embodiments described above, the groove width of the groove 11 may be set to an appropriate value depending on the material of the diaphragm 10 and the film thickness of the groove configuring the detecting element 1.

FIG. 12 shows results of calculation of the stress reduction effect with respect to the groove width for the groove thickness of 1 µm and 2 µm when the material of the diaphragm 10 is polycrystalline silicon.

As shown in FIG. 12, to reduce the stress to the half or less, it is only necessary that the groove width is about 25 µm or more when the film thickness is 2 µm. To reduce the stress to the half or less, it is only necessary that the groove width is about 3 µm or more when the film thickness is 1 µm.

Description has been given of the example in which the present invention is applied to the air flow measuring apparatus employed in a car. However, the present invention may also be used in an apparatus to detect an air flow rate and an air temperature, for example, an airplane and a ship.

The present invention is also applicable to a flow measuring apparatus of a gas other than air, e.g., hydrogen.

Although the groove 11 or the through-hole 30 is used as the stress mitigating unit in the example above, there can be configured not only the groove and the through-hole, but also the sections in which the groove and the through-hole are constructed using flexible materials to mitigate the stress.

It should be further understood by those skilled in the art that although the foregoing description has been made on embodiments of the invention, the invention is not limited thereto and various changes and modifications may be made without departing from the spirit of the invention and the scope of the appended claims.
The above features and embodiments can be combined in any way, partly or as a whole.

## Claims

1. A gas flow measuring apparatus, comprising:
detecting element means (1) in which a diaphragm (10) is formed on a first substrate and which comprises a heating resistor (2) and a thermo-sensitive resistor (6-9) disposed on the diaphragm, and external terminals (12-24) connected to the heating resistor and the thermo-sensitive resistor (6-9); and
flow rate detecting means (29) which is connected to the external terminals (12-24) of the detecting element means (1) to control heating temperature of the heating resistor (2) and which detects a flow rate of gas according to a change in a resistance value of the heating resistor (2) or the thermo-sensitive resistor (6-9), wherein
the detecting element means (1) comprises a resistor area in which the heating resistor (2) and the thermo-sensitive resistor (6-9) are formed and a fixed
section area in which the external terminals (12-24) are formed, and stress mitigating means (11, 11a-11c) is formed at least between the resistor area and the fixed section area.

2. A gas flow measuring apparatus according to claim 1, wherein the stress mitigating means is a groove (11, 11a-11c).

3. A gas flow measuring apparatus according to claims 1 or 2, wherein the groove (11, 11a-11c) has a shape of a straight line and is formed with a length more than an outer diameter size of the diaphragm.

4. A gas flow measuring apparatus according to at least one of claims 1 to 3, wherein the groove (11, 11a-11c) is formed in substantially an inverse-C shape along an outer periphery of the diaphragm (10).

5. A gas flow measuring apparatus according to at least one of claims 1 to 4, wherein the groove (11, 11a-11c) is formed along an entire outer periphery of the diaphragm (10).

6. A gas flow measuring apparatus according to at least one of claims 1 to 5, wherein a thin section formed by the groove (11, 11a-11c) has a thickness size substantially equal to a thickness size of the diaphragm (10).

7. A gas flow measuring apparatus according to claim 1, wherein the stress mitigating means is a through-hole (30).

8. A gas flow measuring apparatus according to claim 7, wherein the through-hole (30) is formed with
a length more than the outer diameter size of the diaphragm (10).

9. A gas flow measuring apparatus according to claim 1, wherein the stress mitigating means is a layer including a material more flexible than a material of the first substrate.

10. A gas flow measuring apparatus according to claim 9, wherein the stress mitigating means is formed with a length more than the outer diameter size of the diaphragm (10).

11. A gas flow measuring apparatus according to at least one of claims 1 to 10, comprising a second substrate including a depressed section, the detecting element means (1) being disposed in the depressed section, wherein
the fixed section area of the detecting element means (1) is fixed onto the second substrate by an adhesive.

12. A gas flow measuring apparatus according to at least one of claims 1 to 11, comprising a second substrate including a depressed section, the detecting element means (1) being disposed in the depressed section', wherein
a tip end section opposing to the fixed section area of the detecting element means (1) with the diaphragm (10) and the groove therebetween and the fixed section area are fixed onto the second substrate by an adhesive.
